# FASCICULE DE BREVET EUROPEEN

(11) **EP 0 558 375 B1**
(45) Date de publication et mention de la délivrance du brevet: **23.10.1996**
(21) Numéro de dépôt: 93400386.4
(22) Date de dépôt: 16.02.1993
(51) Int. Cl.: B60N 2/22

(54) **Siège pour véhicule automobile**
Kraftfahrzeugsitz
Seat for motor vehicles

(30) Priorité: 25.02.1992 FR 9202172
(43) Date de publication de la demande: 01.09.1993
(73) Titulaire: CESA COMPAGNIE EUROPEENNE DE SIEGES POUR AUTOMOBILES, F-92307 Levallois-Perret Cédex (FR)
(72) Inventeur: Chabanne, Jean-Pierre, F-89710 Champvallon (FR); Harry, Sylvain Bernard, F-45270 Villemoutiers (FR)
(74) Mandataire: Polus, Camille

(56) Documents cités:
- EP-A- 0 121 452
- EP-A- 0 128 067
- US-A- 4 538 856
- US-A- 4 627 656
- US-A- 4 634 182

## Description

La présente invention concerne les sièges et, plus particulièrement, les sièges de véhicules automobiles terrestres aptes à occuper plusieurs positions de réglage prédéterminées.

La tendance contemporaine des constructeurs d'automobiles est de concevoir des véhicules dits "monospace" ou "un volume" qui tiennent à la fois de la conduite intérieure dite break et du véhicule utilitaire dit fourgonnette. Etant donné l'universalité d'utilisation visée par ces véhicules, il est nécessaire de les équiper de sièges aptes à prendre des positions multiples et variées de préférence prédéterminées c'est-à-dire aptes à prendre un certain nombre de positions discrètes et, chacune, bien définies. Des sièges de ce type doivent par exemple pouvoir se déployer complètement en couchette, en fauteuil détente ou "relax", en siège normal de conduite, ou se déployer partiellement en tablette et doivent pouvoir aussi se rétracter pour se rabattre partiellement ou se replier totalement d'une manière compacte et relativement peu encombrante en vue de leur escamotage dans le véhicule ou de leur enlèvement de ce dernier.

De tels sièges doivent aussi satisfaire à des normes de sécurité édictées par des organismes professionnels ou les Pouvoirs Publics, de manière que l'occupant d'un siège soit retenu efficacement sur celui-ci par la ceinture de sécurité en cas de chocs violents notamment à grande composante longitudinale, repérée par rapport au véhicule.

Cette dernière contrainte devient particulièrement difficile à satisfaire lorsque, comme cela devient à être de plus en plus courant, une telle ceinture de sécurité n'est plus directement ancrée en deux ou trois points de la structure ou coque du véhicule, la ceinture de sécurité étant en quelque sorte indépendante du siège, mais au contraire cette ceinture fait corps avec le siège et est en quelque sorte "embarquée" sur celui-ci, les différents points d'ancrage de la ceinture de sécurité étant établis directement sur le siège lui-même. Dans une telle situation de ceinture embarquée, en cas de chocs violents, les efforts à absorber et/ou à transmettre se trouvent donc essentiellement localisés dans la zone de l'axe d'inclinaison relative du dossier et de l'assise du siège, d'une part, et dans la zone du piètement reliant habituellement l'assise du siège au plancher du véhicule, d'autre part.

On saisit toute la difficulté qu'il y a à satisfaire à l'ensemble de ces prescriptions, souvent contradictoires, en particulier lorsqu'on se souvient qu'un tel siège doit être produit en grande série et au moindre coût.

Une solution a été proposée dans le document EP-A-0 121 452 pour un siège à dossier articulé dont la position est réglable pratiquement de façon continue pour le cas où un tel siège n'est pas équipé d'une ceinture dite embarquée.

Ce document décrit en effet un siège du type à assise et dossier articulé à positions de réglage multiples, ce siège comprenant une armature d'assise avec une ferrure, une armature de dossier avec une ferrure, une articulation reliant ces ferrures et permettant au dossier de basculer relativement à l'assise pour en changer l'inclinaison, ladite articulation étant munie d'un palier et d'un axe de direction fixe engagé dans ce dernier, un mécanisme de blocage immobilisant le dossier relativement à l'assise dans la position où il a été placé et permettant de changer à volonté cette position, ledit mécanisme étant muni :
- d'un secteur denté solidaire d'une des ferrures et centré sur l'axe de l'articulation,
- d'un grain denté destiné à coopérer avec ce secteur denté et monté mobile sur l'autre de ces ferrures à l'aide d'au moins un guide porté par celle-ci de manière à pouvoir s'y déplacer,
- d'une commande manuelle avec une came mobile coopérant avec une contre-came solidaire du grain denté et avec une sollicitation élastique maintenant normalement appliqués les uns contre les autres notamment les came et contre-came, grain denté et secteur denté.

Cette solution donne satisfaction puisqu'elle permet de construire un siège sans jeu de fonctionnement, que celui-ci résulte des tolérances de fabrication ou de l'usure au cours du temps. Toutefois, une telle solution ne convient pas telle quelle pour la situation où un siège est équipé d'une ceinture de sécurité embarquée et doit pouvoir absorber et/ou transmettre des efforts subis par le siège en cas de chocs violents à grande composante longitudinale survenant aussi bien de par l'avant que de par l'arrière, et lorsqu'un tel siège est d'un type à positions multiples discrètes et qu'il occupe sa position "normale" de conduite ou une position voisine de celle-ci de détente ou relax.

En effet, dans cette dernière situation un siège occupé doit pouvoir supporter et résister sans dommages à des accélérations ou décélérations dépassant dix g, et pour y parvenir avec la solution de ce document il faut alors donner au grain denté et au secteur denté une grande épaisseur et utiliser une denture à grand module. De tels choix conduisent à des modes de réalisation pesants et encombrants et à un réglage relativement grossier qui ne conviennent que très mal à une utilisation pratique en série.

Le but de l'invention est de remédier à la plupart de ces difficultés.

A cet effet, l'invention a pour objet un siège du type précité, caractérisé en ce que les positions de réglage du siège sont prédéterminées, en ce que le siège est destiné à être équipé d'une ceinture de sécurité embarquée, cette ceinture pouvant être opérationnelle pour au moins une première position de réglage et ne pouvant pas être opérationnelle pour au moins une deuxième position de réglage, en ce que le secteur denté coopère avec le grain denté pour bloquer irréversiblement le dossier dans la seconde position de réglage, et en ce que le siège comprend un dispositif de verrouillage comportant un loquet mobile juxtaposé rigidement au grain denté et un flasque cranté juxtaposé rigidement au secteur denté, le loquet et le flasque coopérant entre eux pour bloquer irréversiblement le dossier dans la première position de réglage afin de pouvoir absorber et/ou transmettre des efforts importants subis par le siège en cas de choc à grande composante longitudinale, le dispositif de verrouillage étant mis en oeuvre par la commande manuelle laquelle agit seule à l'encontre de la sollicitation élastique simultanément sur ces mécanisme de blocage et dispositif de verrouillage dont un seul à la fois opère pour retenir le siège dans celle des positions de réglage dans laquelle il a été placé.

D'autres caractéristiques de l'invention apparaîtront à la lecture de la description et des revendications qui suivent ainsi qu'à l'examen du dessin annexé, donné seulement à titre d'exemple, où :
- la Figure 1 est une vue de détail partielle en élévation d'un mode de réalisation de l'invention en position "couchette";
- la Figure 2 est une vue analogue à celle de la Figure 1 en position "détente";
- les Figures 3A et 3B sont des vues analogues en position "normale", respectivement verrouillée ou active et déverrouillée ou inactive;
- la Figure 4 est une vue analogue en position "tablette"; et
- la Figure 5 est une vue analogue en position "compacte".

Les sièges articulés en particulier ceux destinés à équiper des véhicules automobiles terrestres, à positions de réglage multiples prédéterminées modifiables à volonté étant bien connus dans la technique, on ne décrira par la suite que ce qui concerne directement ou indirectement l'invention. Pour le surplus, l'homme du métier du secteur technique concerné puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un mode de réalisation d'un siège articulé selon l'invention avant d'en décrire le montage, la fabrication et le fonctionnement au besoin.

Ce qui suit est essentiellement dirigé sur la zone du siège où sont situés les moyens qui permettent de modifier, à volonté, l'inclinaison ou position relative de son dossier et de son assise, et d'immobiliser le siège dans la position choisie.

Un siège suivant l'invention comprend, entre autres, essentiellement une assise 10, un dossier 20, une articulation 30 permettant de modifier l'inclinaison ou position relative de ces assise et dossier, un mécanisme de blocage 40 immobilisant normalement le dossier relativement à l'assise dans la position où il a été placé et permettant d'en changer à volonté, une commande 50 manuelle permettant la mise en oeuvre du mécanisme de blocage, ainsi qu'un dispositif de verrouillage 60 pour bloquer dans les deux sens opposés le dossier relativement à l'assise quand le dossier occupe en particulier l'une ou l'autre de deux des positions discrètes choisies parmi les diverses prédéterminées qu'il peut prendre, et qui est mis en oeuvre par la commande manuelle en question.

Comme cela a été indiqué précédemment, un siège suivant l'invention est apte à prendre un nombre bien défini de positions discrètes prédéterminées, par exemple cinq comme indiqué auparavant, sans qu'il soit possible, en principe, de pouvoir faire de petites modifications ou des réglages fins de part et d'autre de chacune de ces positions prédéterminées. On se rappellera aussi qu'un tel siège est destiné à incorporer une ceinture de sécurité dite embarquée et qu'il doit donc pouvoir absorber et/ou transmettre des efforts importants subis en cas de chocs relativement violents à grande composante longitudinale, et cela en particulier lorsqu'il occupe au moins deux positions spécifiques qui correspondent, par exemple, à la position normale qu'occupe le siège lorsque le véhicule circule, c'est-à-dire une position dite de conduite ou de route, et aussi une position voisine dite de détente ou "relax" lorsque le dossier est un peu plus incliné vers l'arrière du véhicule relativement à l'assise. En effet, c'est essentiellement pour ces deux positions plus spécifiques qu'un siège selon l'invention a à résister en cas de chocs violents puisque pour les autres positions, soit le siège ne peut pas être occupé soit le siège est en "couchette" et auquel cas il est clair que même si l'occupant est porteur de sa ceinture de sécurité, il est très peu vraisemblable que le véhicule circule normalement sur une chaussée.

L'assise 10 comprend une armature 11 avec une ferrure 12. Comme il est classique, l'armature est destinée à la fixation d'un coussin et la ferrure à la jonction de l'assise au dossier. Ces armature et ferrure d'un seul tenant ou non, sont par exemple faites à l'aide de tubes, profilés ou tôles métalliques mises en forme et travaillées selon des techniques traditionnelles.

Le dossier 20 comprend une armature 21 avec une ferrure 22. Ce qui a été exposé à propos des armature et ferrure de l'assise vaut à propos des armature et ferrure du dossier. C'est pourquoi ces armatures et ferrures sont illustrées très schématiquement.

L'articulation 30 qui permet au dossier de basculer, de s'incliner relativement à l'assise pour en changer l'orientation, relie les ferrures 12 et 22. Cette articulation comprend un palier 31 et un axe 32 engagé dans ce dernier. Par exemple, l'axe 32 est solidaire de la ferrure 12 de l'assise 10 que l'on peut qualifier de fixe, alors que le palier 31 est, lui, solidaire de la ferrure 22 du dossier 20 que l'on peut qualifier de mobile; il est clair que la solution inverse peut aussi être utilisée. S'il y a lieu, l'un de ces axe et palier n'est pas circulaire et est par exemple ovoïde ou pourvu d'un méplat de manière que, lorsqu'il est soumis à un effort perpendiculaire à la direction de l'axe, tout jeu existant ou préexistant soit résorbé.

Le mécanisme de blocage 40 est destiné à normalement immobiliser le dossier relativement à l'assise dans la position où il a été placé et à permettre d'en changer à volonté. Ce mécanisme de blocage 40 comprend un secteur denté 41 avec une denture 410 solidaire de l'une des ferrures 12 et 22 et par exemple de la ferrure 12 de l'assise 10 comme illustré. Ce secteur denté est centré sur l'axe 32 de l'articulation 30. Ce mécanisme de blocage comprend aussi un élément ou grain denté 42 avec une denture 420 destiné à coopérer avec le secteur denté 41. Ce grain denté 42 est monté mobile sur l'autre des ferrures 12, 22 et donc pour ce mode de réalisation sur la ferrure 22 du dossier. Ce grain denté est monté sur la ferrure qui le reçoit à l'aide d'au moins un guide 421, tel qu'un tourillon ou des glissières, porté par la ferrure de manière à pouvoir s'y déplacer par exemple en translation et/ou en rotation. S'il y a lieu, le montage mobile du grain denté sur la ferrure est fait avec du jeu, de manière en particulier à pouvoir s'affranchir de tolérances de fabrication et/ou de montage trop strictes. Ce secteur denté et ce grain denté sont par exemple confectionnés à partir de tôles métalliques travaillées par emboutissage ou découpage dit fin. Comme on peut le relever, l'une des dentures 410, 420, par exemple la denture 410 du secteur denté 41, n'est pas continue et la taille et/ou le pas des dents n'est pas uniforme pour les raisons qui apparaîtront par la suite.

La commande 50 manuelle permet d'agir notamment sur le mécanisme de blocage 40 pour permettre de changer, à volonté, l'orientation du dossier relativement à l'assise et le placer dans l'une quelconque des diverses positions discrètes prédéterminées. Comme on le notera par la suite, cette commande permet aussi d'agir sur le dispositif de verrouillage 60. La commande 50 comprend une came 51 mobile, une contre-came 52 destinée à coopérer avec la came 51 ainsi qu'une sollicitation élastique 53. La came 51 est montée sur l'une des ferrures 12, 22 et par exemple sur la ferrure 22 du dossier 20 de manière à se déplacer avec lui. Comme on le voit, cette came 51, qui a par exemple approximativement la forme d'une botte, est montée sur une cheville, rivet, téton ou analogue 510 de manière à pouvoir basculer dans un plan parallèle à celui de la feuille du dessin, c'est-à-dire selon une direction parallèle à l'axe d'articulation qui est perpendiculaire à ce plan. La rotation de cette came est commandée, à volonté, par l'occupant du siège à l'aide d'un levier 500 ou analogue, à portée de main par exemple sur le côté droit ou le côté gauche du siège, avec au besoin une timonerie ou analogue de renvoi associée au levier pour, s'il y a lieu, pouvoir le manoeuvrer de l'arrière du dossier 20. La contre-came 52 est solidaire du grain denté 42. Comme on le voit, la contre-came 52 comprend une zone d'immobilisation 521 et une zone de neutralisation 522 sur lesquelles on reviendra par la suite. La commande 50 comprend aussi une sollicitation élastique 53, par exemple un ressort à boudin ou similaire, ancrée d'une part, par exemple au levier 500 et, d'autre part, à l'armature 21 ou ferrure 22 du dossier 20. Ces came et contre-came sont, de préférence, faites en métal et confectionnées par des techniques traditionnelles d'usinage ou par emboutissage ou découpage fin par exemple, voire par moulage ou frittage de poudres.

Le dispositif de verrouillage 60 comprend un loquet 61 mobile, associé au grain denté 42, et un flasque 62 cranté, associé au secteur denté 41. Comme on le voit, le flasque cranté 62 présente une plage 620 en arc de cercle centrée sur l'axe 32 de l'articulation avec un repère 621 pour au moins chacune des deux positions spécifiques normale et détente. Selon le mode de réalisation dessiné, les repères 621 sont un ou des promontoires en saillie, qui sont destinés à coopérer avec au moins une indentation 610 du loquet 61. Selon une variante d'exécution non illustrée, ces repères sont un ou des alvéoles en retrait et sont destinés à coopérer avec au moins un bec du loquet servant d'indentation. Il est clair que l'on peut utiliser, si on le souhaite, autant de repères qu'il y a de positions discrètes, un repère par position.

Tous les constituants décrits auparavant sont assemblés et montés comme cela apparaît clairement sur les diverses figures du dessin. On comprend donc que la sollicitation élastique est telle qu'elle maintient normalement appliquée les uns contre les autres, came et contre-came, grain denté et secteur denté, et le cas échéant palier et axe de manière à établir et maintenir entre eux un contact sans jeu. En effet, cette sollicitation élastique applique s'il y a lieu d'abord le grain denté contre l'un de ses guide ou glissière de par le choix judicieux des points d'application des efforts et de par la localisation des endroits de réaction et ensuite, sous la poussée du grain denté contre le secteur denté, palier et axe; on résorbe ainsi tout jeu éventuel présent comme exposé dans le document mentionné auparavant. Il est clair toutefois que le grain denté et son guide et/ou le palier et son axe peuvent aussi être montés et assemblés sans jeu notable.

Comme on le voit pour le mode de réalisation illustré, la contre-came 52 est portée pour partie par le grain denté 42 et pour partie par le loquet 61. Comme on peut l'observer, la zone d'immobilisation 521 de la contre-came 52 est utilisée pour maintenir au contact le grain denté 42 et le secteur denté 41, d'une part, et le loquet 61 et le flasque cranté 62, d'autre part. La zone de neutralisation 522 de la contre-came 52 sert à supprimer rapidement ce contact et à autoriser un changement de position. Pour ce faire, on utilise la face opposée de la came 51 qui agit sur la zone de neutralisation par exemple un plot de la contre-came. Comme on le voit, la zone d'immobilisation 521 est portée par le loquet 61 et la zone de neutralisation 522 est portée par le grain denté 42.

Comme on peut l'observer, s'il y a lieu, le grain denté 42 et le loquet 61 sont faits d'un seul tenant ou bien à l'aide de pièces distinctes accolées l'une à l'autre et immobilisées par exemple par soudage, rivetage, vissage, collage,.... Ceci vaut aussi pour le secteur denté 41 et le flasque cranté 62 qui sont portés par une même ferrure et solidaires de celle-ci.

Il y a lieu de noter que le grain denté et le loquet sont portés par une même ferrure et montés de manière à pouvoir se déplacer simultanément à l'unisson à l'aide d'une commande unique et qu'ils sont tous les deux soumis à l'action d'une sollicitation élastique unique.

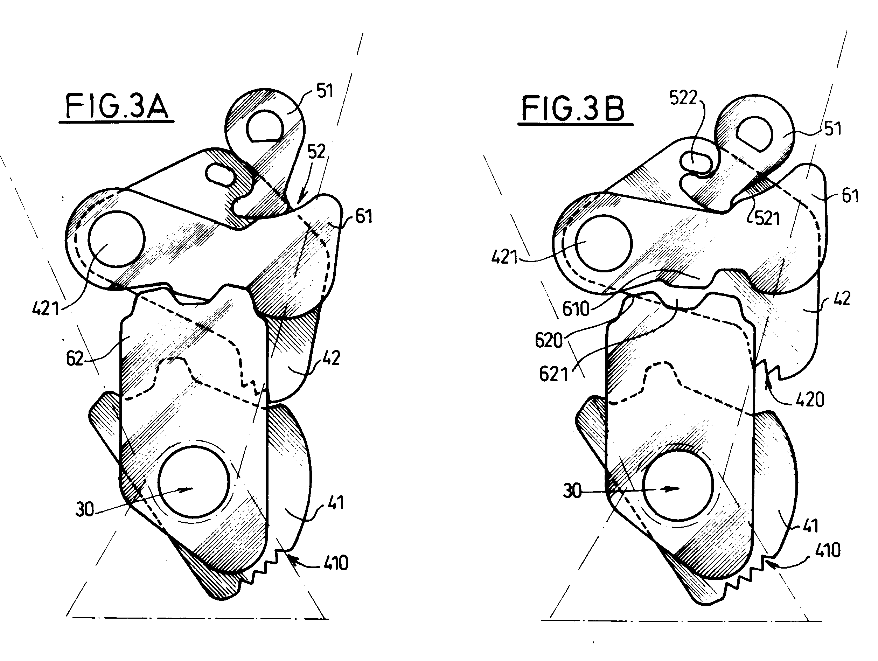

On se reportera maintenant plus particulièrement aux Figures 3A et 3B qui donnent une vue latérale en élévation de l'invention, l'arrière d'un siège étant situé à la gauche de la figure et l'avant sur la droite de celle-ci, à l'état verrouillé et à l'état déverrouillé , respectivement, en position normale ou route.

On suppose que le siège est initialement (Figure 3A) en position normale et verrouillée dans cette position. On voit alors immédiatement à l'examen du loquet et du flasque cranté, que quel que soit l'effort appliqué et en particulier son sens, le dispositif de verrouillage bloque irréversiblement dans les deux sens opposés, le dossier sur l'assise et cela d'une manière pratiquement indéflectible. Le choix des dimensions et des matériaux adoptés notamment pour ces éléments en particulier, permet d'absorber et/ou de transmettre des efforts importants subis par le siège en cas de chocs violents à grande composante longitudinale.

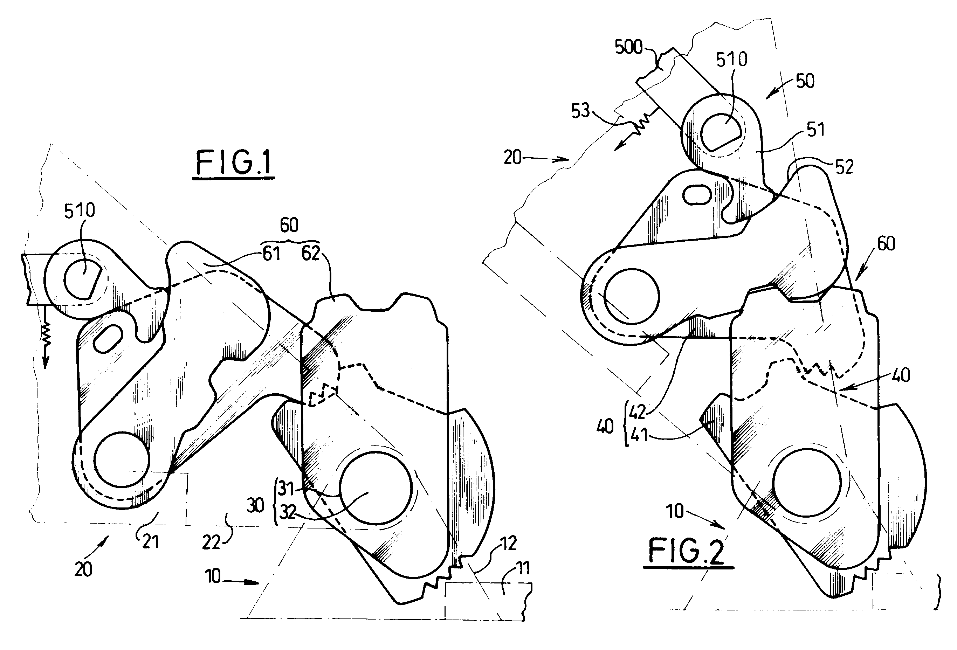

Lorsque l'utilisateur du siège souhaite en modifier la position, il agit sur la commande unique et en particulier son levier à l'encontre de la sollicitation élastique, pour placer le mécanisme de blocage et le dispositif de verrouillage dans la position où il sont illustrés sur la Figure 3B. On observera que par le choix judicieux de la localisation et du profil des came et contre-came, la rotation de la came provoque en fin de course, un dégagement très rapide du grain denté du secteur denté et, simultanément, du loquet du flasque cranté. On évite ainsi que l'utilisateur tente de modifier la position du dossier relativement à l'assise avant que les éléments qui étaient au préalable engagés mutuellement les uns dans les autres et coopéraient, soient totalement séparés et dégagés les uns des autres. Si l'utilisateur souhaite par exemple placer le siège en position détente comme illustré sur la Figure 2, il lui suffit de donner au dossier une inclinaison approximative et de relâcher la commande pour que le mécanisme de blocage et le dispositif de verrouillage soient simultanément replacés automatiquement dans la position illustré sur la Figure 2. Dans cette situation, c'est encore le dispositif de verrouillage qui assure l'immobilisation dans les deux sens opposés du dossier relativement à l'assise.

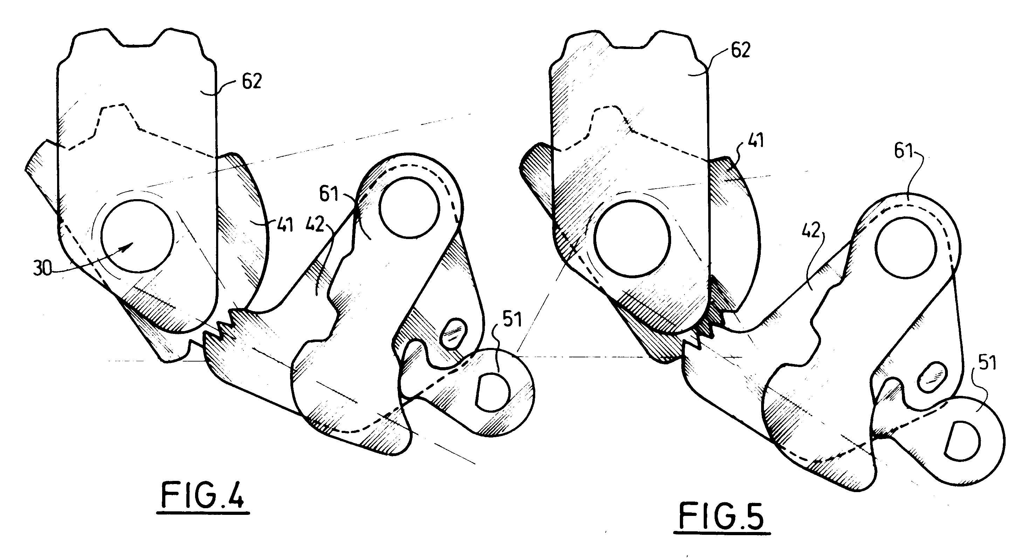

Si l'utilisateur souhaite donner une autre position, particulière, des diverses positions discrètes possibles comme illustré par exemple sur les Figures 1, 4 et 5, il suffit d'opérer comme précédemment. On voit que la retenue du dossier relativement à l'assise dans la position où il a été placé, n'est plus assurée que par le grain denté et le secteur denté sans que le loquet et le flasque cranté agissent.

Pour faciliter une préorientation relative du dossier relativement à l'assise afin de rendre plus commodes les changements d'inclinaison, on utilise par exemple des systèmes à "bonhomme à ressort" ou à échappement mécanique ou bien des profils qui permettent une mise en repérage précise ultérieure sous l'action de la seule sollicitation élastique. Ceci peut par exemple être aisément obtenu en donnant à la denture 410 du secteur denté 41 une configuration particulière comme illustré. On voit que la denture 410 présente des solutions de continuité en forme d'échancrure évasée vers l'extérieur qui servent en quelque sorte de gâche à un pêne dont le rôle est assuré par le grain denté en forme de coin convergent vers l'extérieur.

On comprend donc tout l'intérêt de l'invention qui en quelque sorte utilise deux modules distincts spécialisés qui coopèrent entre eux et dont l'un n'opère que lorsqu'il n'y a pas de risque notable de voir apparaître une grande contrainte anormale et dont l'autre offre essentiellement lorsque les risques d'apparition de contraintes particulièrement importantes existent. Ce dédoublement des fonctions du grain denté associé à l'utilisation d'un secteur denté et d'un flasque cranté jumelés permet des réductions d'encombrement notables aussi bien transversales que longitudinales compte-tenu de l'importance exceptionnelle des débattements nécessaires au fonctionnement du type de siège considéré et qui, en outre, permet des économies de matière et donc une réduction de masse importante, tout en satisfaisant aux normes de sécurité imposées aux sièges à ceintures de sécurité embarquées.

Les avantages apportés par le siège perfectionné selon l'invention sont mis en lumière par la description qui précède et les figures du dessin qui l'accompagnent.

## Revendications

1. Siège du type à assise (10) et dossier (20) articulé à positions de réglage multiples, ce siège comprenant une armature (11) d'assise (10) avec une ferrure (12), une armature (21) de dossier (20) avec une ferrure (22), une articulation (30) reliant ces ferrures (12, 22) et permettant au dossier (20) de basculer relativement à l'assise (10) pour en changer l'inclinaison, ladite articulation étant munie d'un palier (31) et d'un axe (32) de direction fixe engagé dans ce dernier (31), un mécanisme de blocage (40) immobilisant le dossier (20) relativement à l'assise (10) dans la position où il a été placé et permettant de changer à volonté cette position, ledit mécanisme étant muni :
- d'un secteur denté (41) solidaire d'une des ferrures (12, 22) et centré sur l'axe (32) de l'articulation (30),
- d'un grain denté (42) destiné à coopérer avec ce secteur denté (41) et monté mobile sur l'autre de ces ferrures (12, 22) à l'aide d'au moins un guide (421) porté par celle-ci de manière à pouvoir s'y déplacer,
- d'une commande manuelle (50) avec une came (51) mobile coopérant avec une contre-came (52) solidaire du grain denté (42) et avec une sollicitation élastique (53) maintenant normalement appliqués les uns contre les autres notamment les came (51) et contre-came (52), grain denté (42) et secteur denté (41),
caractérisé en ce que les positions de réglage du siège sont prédéterminées,
en ce que le siège est destiné à être équipé d'une ceinture de sécurité embarquée, cette ceinture pouvant être opérationnelle pour au moins une première position de réglage et ne pouvant pas être opérationnelle pour au moins une deuxième position de réglage,
en ce que le secteur denté (41) coopère avec le grain denté (42) pour bloquer irréversiblement le dossier (20) dans la seconde position de réglage, et
en ce que le siège comprend un dispositif de verrouillage (60) comportant un loquet (61) mobile juxtaposé rigidement au grain denté (42) et un flasque (62) cranté juxtaposé rigidement au secteur denté (41), le loquet (61) et le flasque (62) coopérant entre eux pour bloquer irréversiblement le dossier (20) dans la première position de réglage afin de pouvoir absorber et/ou transmettre des efforts importants subis par le siège en cas de choc à grande composante longitudinale, le dispositif de verrouillage (60) étant mis en oeuvre par la commande manuelle (50) laquelle agit seule à l'encontre de la sollicitation élastique (53) simultanément sur ces mécanisme de blocage (40) et dispositif de verrouillage (60) dont un seul à la fois opère pour retenir le siège dans celle des positions de réglage dans laquelle il a été placé.

2. Siège selon la revendication 1, caractérisé en ce que la ceinture de sécurité est opérationnelle pour deux positions de réglage prédéterminées, l'une normale dite "de conduite" et l'autre voisine de la précédente dite "de détente".

3. Siège selon la revendication 2, caractérisé en ce que le flasque cranté (62) présente une plage (620) en arc de cercle centré sur l'axe (32) de l'articulation (30) avec un repère (621) pour chacune des deux positions normale et détente, au moins.

4. Siège selon la revendication 3, caractérisé en ce que les repères (621) sont des alvéoles en retrait et sont destinés à coopérer avec au moins une indentation (610) du loquet (61).

5. Siège selon la revendication 3, caractérisé en ce que les repères (621) sont des promontoires en saillie et sont destinés à coopérer avec au moins une indentation (610) du loquet (61).

6. Siège selon l'une quelconque des revendications 1 à 5, caractérisé en ce que la contre-came (52) est portée pour partie par le grain denté (42) et pour partie par le loquet (61).

7. Siège selon l'une quelconque des revendications 1 à 6, caractérisé en ce que la sollicitation élastique (53) agit sur la came (51).

8. Siège selon l'une quelconque des revendications 6 et 7, caractérisé en ce que la contre-came (52) comprend une zone d'immobilisation (521) pour maintenir au contact grain denté (42) et secteur denté (41), d'une part, et loquet (61) et flasque cranté (62), d'autre part, et une zone de neutralisation (522) pour supprimer rapidement ce contact et autoriser un changement de position.

9. Siège selon la revendication 8, caractérisé en ce que la zone d'immobilisation (521) est portée par le loquet (61) et la zone de neutralisation (522) est portée par le grain denté (42).

10. Siège selon l'une quelconque des revendications 1 à 9, caractérisé en ce que l'articulation (30) comprend un palier (31) et un axe (32) dont l'un d'eux (31, 32) n'est pas circulaire.

11. Siège selon l'une quelconque des revendications 1 à 10, caractérisé en ce que le mécanisme de blocage (40) comprend un grain denté (42) monté mobile sur l'une des ferrures (12, 22) à l'aide d' au moins un guide (421) de manière à pouvoir s'y déplacer avec du jeu.

12. Siège selon la revendication 10, caractérisé en ce que la sollicitation élastique (53) opère de manière à établir et maintenir un contact sans jeu entre palier (31) et axe (32) voire entre grain denté (42) et guide (421).

13. Siège selon l'une quelconque des revendications précédentes, caractérisé en ce que la ceinture de sécurité n'est pas opérationnelle pour des position de réglage prédéterminées dites "de couchette", "de tablette" et "compacte".

## Claims

1. Seat of the type comprising a squab (10) and pivoted back (20) with multiple adjustment positions, this seat comprising a frame (11) of the squab (10) with mountings (12), a frame (21) of the back (20) with mountings (22), a hinge (30) connecting these mountings (12, 22) and allowing the back (20) to tilt relative to the squab (10) in order to change the inclination thereof, the said hinge being provided with a bearing (31) and a pin (32) of fixed direction engaged in the latter (31), a blocking mechanism (40) immobilizing the back (20) relative to the squab (10) in the position in which it has been placed and making it possible to change this position at will, said mechanism being provided:
- with a toothed sector (41) integral with one of the mountings (12, 22) and centred on the pin (32) of the hinge (30),
- with a toothed grain (42) intended to cooperate with this toothed sector (41) and mounted to move on the other of these mountings (12, 22) by means of at least one guide (421) carried by the latter in order to be able to move therein,
- with a manual control (50) with a movable cam (51) cooperating with a counter-cam (52) integral with the toothed grain (42) and with an elastic action (53) normally keeping in particular the cam (51) and counter-cam (52), toothed grain (42) and toothed sector (41) pressed one against the other,
characterised in that the adjustment positions of the seat are predetermined,
in that the seat is intended to be equipped with an incorporated safety belt, this belt being able to be operational for at least one first adjustment position and not being able to be operational for at least one second adjustment position,
in that the toothed sector (41) cooperates with the toothed grain (42) in order to irreversibly block the back (20) in the second adjustment position, and
in that the seat comprises a locking device (60) comprising a movable latch (61) rigidly juxtaposed to the toothed grain (42) and a notched cheek (62) rigidly juxtaposed to the toothed sector (41), the latch (61) and the cheek (62) cooperating in order to irreversibly lock the back (20) in the first adjustment position in order to be able to absorb and/or transmit considerable stresses undergone by the seat in the case of an impact having a great longitudinal component, the locking device (60) being put into operation by the manual control (50) which acts alone in opposition to the elastic action (53) simultaneously on this blocking mechanism (40) and locking device (60) of which only one at a time operates in order to keep the seat in that of the adjustment positions in which it has been placed.

2. Seat according to Claim 1, characterised in that the safety belt is operational for two predetermined adjustment positions, a normal so-called "driving" position and the other close to the former, the so-called "relaxation" position.

3. Seat according to Claim 2, characterised in that the notched cheek (62) has an area (620) in the shape of an arc of a circle centred on the pin (32) of the hinge (30) with a reference mark (621) for each of the two normal and relaxation positions, at least.

4. Seat according to Claim 3, characterised in that the reference marks (621) are recesses and are intended to cooperate with at least one indentation (610) of the latch (61).

5. Seat according to Claim 3, characterised in that the reference marks (621) are projections and are intended to cooperate with at least one indentation (610) of the latch (61).

6. Seat according to one of Claims 1 to 5, characterised in that the counter-cam (52) is carried partly by the toothed grain (42) and partly by the latch (61).

7. Seat according to one of Claims 1 to 6, characterised in that the elastic action (53) acts on the cam (51).

8. Seat according to one of Claims 6 and 7, characterised in that the counter-cam (52) comprises an immobilization zone (521) to keep the toothed grain (42) and toothed sector (41), on the one hand, and the latch (61) and notched cheek (62), on the other hand, in contact, and a neutralisation zone (522) for rapidly eliminating this contact and allowing a change of position.

9. Seat according to Claim 8, characterised in that the immobilization zone (521) is carried by the latch (61) and the neutralisation zone (522) is carried by the toothed grain (42).

10. Seat according to one of Claims 1 to 9, characterised in that the hinge (30) comprises a bearing (31) and a pin (32) whereof one (31, 32) is not circular.

11. Seat according to one of Claims 1 to 10, characterised in that the blocking mechanism (40) comprises a toothed grain (42) mounted to move on one of the mountings (12, 22) be means of at least one guide (421) in order to be able to move therein with play.

12. Seat according to Claim 10, characterised in that the spring action (53) operates in order to establish and maintain contact without play between the bearing (31) and pin (32) even between the toothed grain (42) and guide (421).

13. Seat according to one of the preceding Claims, characterised in that the safety belt is not operational for predetermined adjustment positions, so-called "sleeping" position, "shelf" position and "compact" position.

## Patentansprüche

1. Sitz einer Art mit einem Sitzteil (10) und einer Rückenlehne (20), die in mehrere Stellungen schwenkbar ist, wobei der Sitz eine Armierung (11) für das Sitzteil (10) mit einem Beschlag (12), eine Armierung (21) für die Rückenlehne (20) mit einem Beschlag (22), ein Gelenk (30) aufweist, welches diese Beschläge (12, 22) verbindet und ermöglicht, daß die Rückenlehne (20) in Bezug auf das Sitzteil (10) zur Veränderung ihrer Neigung gekippt werden kann, wobei das Gelenk mit einem Lager (31) und einer in diesem (31) aufgenommenen Achse (32) fester Richtung versehen ist, und einen Blockierungsmechanismus (40) aufweist, der die Rückenlehne (20) in Bezug auf das Sitzteil (10) in der Stellung, in der sie angeordnet ist, festlegt und eine beliebige Änderung dieser Stellung gestattet, wobei der Mechanismus mit
- einem Zahnsektor (41), welcher mit einem der Beschläge (12, 22) fest verbunden ist und auf die Achse (32) des Gelenks (30) zentriert ist,
- einem Zahnelement (42), welches für ein Zusammenwirken mit diesem Zahnsektor (41) bestimmt und auf dem anderen dieser Beschläge (12, 22) mittels wenigstens einer von diesem so getragenen Führung (421), daß sie sich darauf verschieben kann, beweglich ist,
- einem Handantrieb (50) mit einem beweglichen Nocken (51), der mit einem Gegennocken (52), der mit dem Zahnelement (42) fest verbunden ist, und mit einer elastischen Belastung (53) zusammenwirkt, welche im Normalzustand die einen und die anderen, insbesondere Nocken (51) und Gegennocken (52), Zahnelement (42) und Zahnsektor (41), gegeneinander hält, versehen ist,
dadurch gekennzeichnet, daß die Einstellagen des Sitzes vorgegeben sind,
daß der Sitz für eine Ausstattung mit einem sitzeigenen Sicherheitsgurt bestimmt ist, wobei dieser Sicherheitsgurt für wenigstens eine erste Einstellage einsatzfähig ist und für wenigstens eine zweite Einstellage nicht einsatzfähig sein kann,
daß der Zahnsektor (41) mit dem Zahnelement (42) für ein irreversibles Blockieren der Rückenlehne (20) in der zweiten Einstellage zusammenwirkt, und
daß der Sitz eine Verriegelungsvorrichtung (60) aufweist, welche eine bewegliche Fallklinke (61) die neben dem Zahnelement (42) liegend starr mit diesem verbunden ist, und einen gerasteten Flansch (62), der neben dem Zahnsektor (41) liegend starr mit diesem verbunden ist, umfaßt, wobei die Fallklinke (61) und der Flansch (62) die Rückenlehne (20) in der ersten Stellung irreversibel blockierend zusammenwirken, damit große auf den Sitz im Falle von Stößen mit großer Längskomponente wirkende Kräfte absorbiert und/oder übertragen werden können, wobei die Verriegelungsvorrichtung (60) mit der Handsteuerung (50) benutzt wird, die allein gegen die elastische Belastung (23) gleichzeitig auf den Blockiermechanismus (40) und die Verriegelungsvorrichtung (60) wirkt, von denen der bzw. die eine gleichzeitig dahingehend wirkt, den Sitz in derjenigen der Einstellagen zu halten, in der er angeordnet worden ist.

2. Sitz nach Anspruch 1, dadurch gekennzeichnet, daß der Sicherheitsgurt für zwei bestimmte Einstellagen einsatzfähig ist, von denen die eine die normale, Fahrstellung genannte ist, und die andere eine zur vorgenannten benachbarte, Entspannungsstellung genannte, ist.

3. Sitz nach Anspruch 2, dadurch gekennzeichnet, daß der gerastete Flansch (62) einen auf die Achse (32) des Gelenks (30) zentrierten Kreisbogenbereich (620) mit einer Markierung (621) für wenigstens sowohl die Normal- als auch die Entspannungsstellung aufweist.

4. Sitz nach Anspruch 3, dadurch gekennzeichnet, daß die Markierungen (621) zurückgesetzte Zellen und für ein Zusammenwirken mit wenigstens einer Ausbuchtung (610) der Fallklinke (61) bestimmt sind.

5. Sitz nach Anspruch 3, dadurch gekennzeichnet, daß die Markierungen (621) vorspringende Vorerhebungen und für ein Zusammenwirken mit wenigstens einer Ausbuchtung (610) der Fallklinke (61) bestimmt sind.

6. Sitz nach irgendeinem der Ansprüche 1 bis 5, dadurch gekennzeichnet, daß der Gegennocken (52) zum Teil von dem Zahnelement (42) und zum Teil von der Fallklinke (61) getragen wird.

7. Sitz nach irgendeinem der Ansprüche 1 bis 6, dadurch gekennzeichnet, daß die elastische Belastung (53) auf den Nocken (51) wirkt.

8. Sitz nach irgendeinem der Ansprüche 6 und 7, dadurch gekennzeichnet, daß der Gegennocken (52) eine Immobilisierungszone (521) zum Inberührunghalten von Zahnelement (42) und Zahnsektor (41) einerseits und von Fallklinke (61) und gerastetem Flansch (62) andererseits und eine Neutralisierungszone (522) zum schnellen Aufheben dieser Berührung und Freigabe einer Stellungsänderung aufweist.

9. Sitz nach Anspruch 8, dadurch gekennzeichnet, daß die Immobilisierungszone (521) von der Fallklinke (61) und die Neutralisierungszone (522) vom Zahnelement (42) getragen wird.

10. Sitz nach irgendeinem der Ansprüche 1 bis 9, dadurch gekennzeichnet, daß das Gelenk (30) ein Lager (31) und eine Achse (32) aufweist, von denen nicht beide (31, 32) kreisförmig sind.

11. Sitz nach irgendeinem der Ansprüche 1 bis 10, dadurch gekennzeichnet, daß der Blockierungsmechanismus (40) ein Zahnelement (42) aufweist, das auf einem der Beschläge (12, 22) mittels wenigstens einer Führung (421) so beweglich angebracht ist, daß es sich darauf mit Spiel bewegen kann.

12. Sitz nach Anspruch 10, dadurch gekennzeichnet, daß die elastische Belastung (53) so wirkt, daß eine Berührung zwischen Lager (31) und Achse (32) und selbst zwischen Zahnelement (42) und Führung (421) hergestellt und aufrechterhalten werden kann.

13. Sitz nach irgendeinem der vorstehenden Ansprüche, dadurch gekennzeichnet, daß der Sicherheitsgurt nicht für bestimmte Einstellagen, die "Schlaf"-, "Tischchen"- und "Kompakt"-Stellung genannt werden, einsatzfähig ist.
